# EUROPEAN PATENT SPECIFICATION

(11) **EP 1 060 662 B1**
(45) Date of publication and mention of the grant of the patent: **01.09.2004**
(21) Application number: 00201707.7
(22) Date of filing: 08.05.2000
(51) Int. Cl.: A01K 11/00

(54) **Ear tag with tissue sample security feature**
Ohrmarke mit Gewebsprobe zum Manipulationsschutz
Boucle d'oreille avec échantillon de tissu comme système de sécurité

(30) Priority: 07.05.1999 NL 1012000
(43) Date of publication of application: 20.12.2000
(73) Proprietor: Pragmatic Network Creations ETS., Vaduz (LI); HENDRIKX, Jacobus Gerardus Maria, NL-5242 HB Rosmalen (NL)
(72) Inventor: Hendrikx, Jacobus Gerardus Maria, 5242 HB Rosmalen (NL)
(74) Representative: van Westenbrugge, Andries

(56) References cited:
- EP-A- 0 983 722
- NL-A- 8 102 068
- US-A- 4 597 208
- US-A- 4 653 208
- US-A- 4 878 456

## Description

The invention is related to an ear tag for establishing the identity of an animal, comprising at least one plate element, a pin, attached to the plate element, intended to be accommodated in a hole in the ear of the animal, and a counter-element into which the pin can be fastened by pressing, said pin having a cutting edge for piercing the ear of the animal on joining the pin and the counter-element to one another by pressing in order to lock the ear tag to the ear, as well as means for storing the tissue material removed from the ear during piercing.

Such an ear tag is disclosed in NL-A-8102068.

Such ear tags are used in particular in cattle for identification of the individual animals. The aim of such an identification is to provide insight into the origin of each individual animal. By this means the "family ties" can be traced, as can the hereditary characteristics of an animal. These data can play an important role in tracking down and combating abnormalities which are dangerous not only for the animal itself but also for the consumer who uses products originating from these animals.

Moreover, in this context it is important that the owner, or previous owner, of the animal can be traced.

The intention is that the data of animals are stored and kept up to date in a central facility. To this end the authority which administers the register concerned must be informed immediately of changes such as birth, death and the like.

When fitting an ear tag according to the invention a sample of the tissue material is taken directly. As is known, the tissue material of each animal possesses unique characteristics which are embodied in the DNA data of that material. By now coupling these data with the ear tag fitted, fraud is made appreciably more difficult.

Incidentally, the DNA data do not have to be determined immediately. It is necessary to determine these data only if, for whatever reason, the correctness of the identity of an animal has to be traced. The DNA data of the sample taken when fitting the ear tag can then be compared with those of the animal concerned. A comparison of these data should then reveal whether the ear tag provides the correct data.

The object of the invention is to improve the safety of the ear tag even further. Said aim is achieved in that a cap is joined to the counter-element such that the cap and the means for storing the Tissue material are detachable or can be broken away from the ear tag. The safest form of registration is that in which the samples thus obtained are stored in a central register. To this end the sample of tissue material must be removed from the ear tag, which can be achieved with an embodiment with which the cap is joined to the counter-element such that it is detachable or can be broken away.

Since the cutting head can be firmly clamped with respect to the cap during fastening of the pin and the counter-element to one another by pressing, a sealed container which contains a sample of tissue material from the animal concerned is obtained directly on fitting the ear tag.

The identification data on the ear tag, which remains on the animal, are identical to those which are present on the cap, so that unambiguous establishment, which is not susceptible to fraud, of the identity of the animal is ensured.

Preferably, the cap is detached or broken away from the counter-element during fastening of the pin and said counter-element to one another by pressing.

As is customary, the pin and the counter-element can have been fastened to one another by means of a snap-fit joint.

The invention also relates to a tool for fastening the plate element with pin and the counter-element to one another in order to form an ear tag on the ear of an animal, comprising
- tongs, the jaws of which are shaped to engage on, respectively, the plate element and the counter-element,
- receptor means for accommodating the assembly consisting of the cutting head, the head and the tissue material, which assembly is released on fastening the plate element with pin and the counter-element to one another by pressing.

The receptor means comprise a magazine with several chambers, as well as indexing means for successively moving the magazine in such a way that the next chamber is held ready when fitting ear tags in succession.

Said magazine can, for example, be constructed as a drum with the chambers located at the periphery thereof. Alternative embodiments are also possible, such as a band-shaped magazine.

The invention will be explained in more detail below with reference to an illustrative embodiment shown in the figures.
Figure 1 shows a first step in fitting an ear tag according to the invention.
Figure 2 shows a second step.
Figure 3 shows a third step.
Figure 4 shows a container containing a sample of tissue material.
Figure 5 shows a first embodiment of a tool for use with the invention.

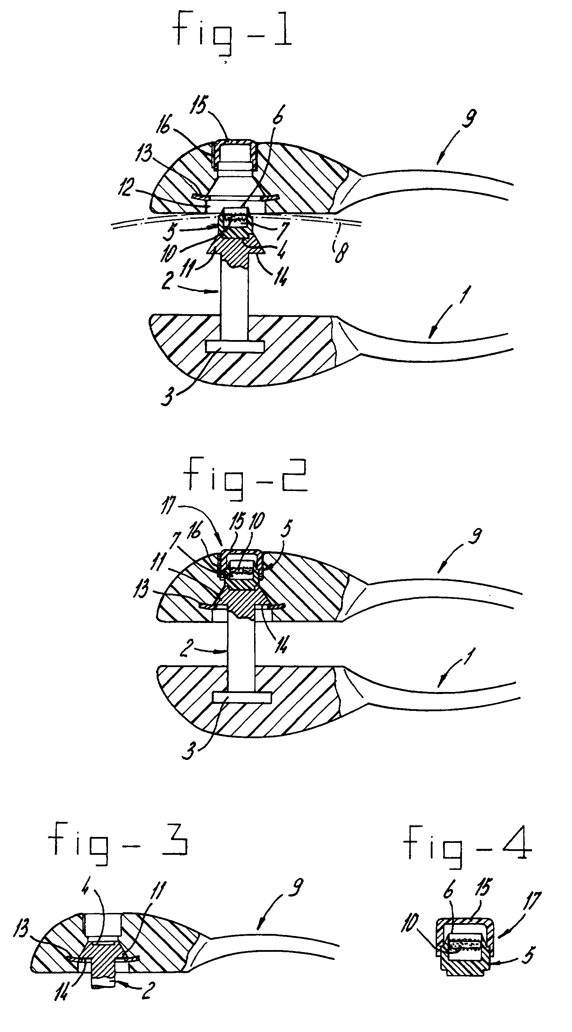

The ear tag shown in Figure 1 comprises a plate element 1, to which a pin 2 is fixed by its widened head 3. At its end opposite the head 3, the pin 2 has a recess 4 in which a cutting head, indicated in its entirety by 5, is detachably fastened.

The cutting head 5 has a circular cutting edge 6, within which a recess 7 is defined.

As shown in Figure 1, the cutting edge 6 is placed against the ear 8 of an animal, whilst a counter-element 9 forming part of the ear tag is placed on the other side of the ear 8. Incidentally, in the illustrative embodiment shown the shape of this counter-element is identical to the shape of the plate element 1.

On pressing the plate element 1 with pin 2 and the counter-element 3 towards one another a sample of tissue material 10 is cut from the ear of the animal and drops into the recess 7.

The pin 2 has a conical head 11, whilst a snap-fit ring 13 is accommodated in the recess 12 in the counter-element 9. On pressing pin 2 and counter-element 9 towards one another the shoulder 14 of the conical head 11 engages behind the snap-fit ring 13, as a result of which a firm join is ensured.

At the same point in time the cutting edge 6 of the cutting head 5 reaches a position within the periphery of the cap 15, such that the two are firmly clamped to one another.

Said cap 15 is joined by means of one or more break-release edges 16 to the remainder of the counter-element 9.

According to the invention provision can be made for said break-release edges 16 to break as soon as the head 11 of the pin 2 clicks behind the snap-fit edge 13 and for the container 17, comprising the cutting head 5, the cap 15 and the sample of tissue material, which is formed in this way to be released.

The container 17, in particular the cap 15, bears the same identification number as the counter-element 9, as a result of which the sample of tissue material 10 and the animal concerned can be unambiguously related to one another.

In the embodiment shown in Figure 3 the counter-element 9, from which the container 17 as shown in Figure 4 has been removed, is shown.

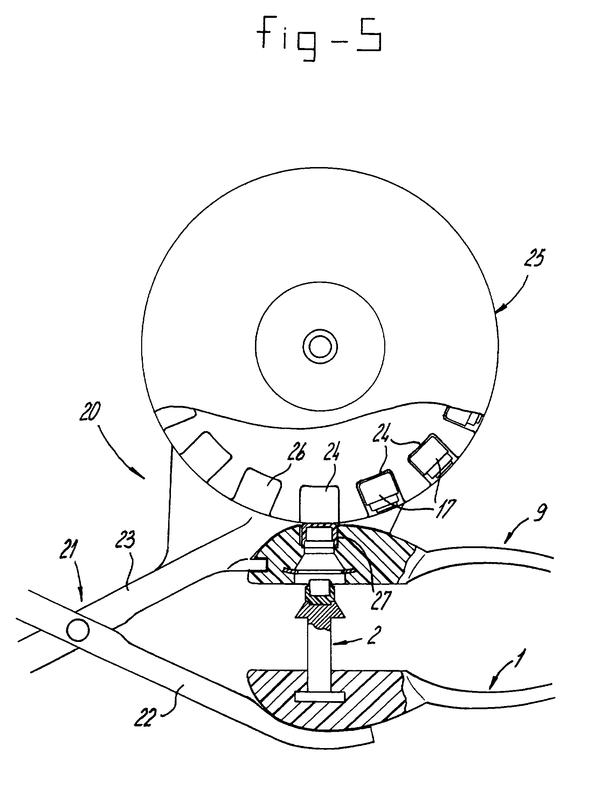

The tool shown in Figure 5, which is indicated in its entirety by 20, can be used for fitting the ear tag according to the invention. Said tool comprises tongs 21 with jaws 22, 23. Said jaws 22, 23 engage on, respectively, the plate element 1 and the counter-element 9. The pin 2 fixed to the plate element 1 can be pressed into the counter-element 9 by this means, as described with reference to Figures 1 - 4.

The container 7, containing the sample of tissue material 10, released during this operation is then immediately accommodated in a chamber 24 of the magazine 25 coupled to the jaw 23 of the tongs 21.

By means of indexing means (not shown) the magazine can then be rotated such that the next chamber 26 is brought opposite the hole 27 in the jaw 23 of the tongs 21.

The tool 20 is then ready to accommodate a further container 17 containing tissue material.

Both the plate element 1 and the counter-element 3 can have an edge reinforced by means of one or more ribs. These ribs prevent said elements 1, 3 being rolled up and subsequent removal of the ear tag via the hole in the ear of the animal.

An elongated transponder or chip can, for example, have been accommodated in the rib(s). Removal of said rib(s) would then result in damage to the transponder or chip, as a result of which fraud is made additionally difficult. The ear tag can then no longer be detected electronically.

Removal of the pin and the like is made additionally more difficult if the elements 1, 3 have corrugations and/or holographic images at the location of their mutual snap-fit joint. In the case of attempted manipulation such corrugations/images would be irreparably damaged.

Although a removable container 17 is present in the embodiment shown in the figures, the container can also be permanently attached to the counter-element 9.

## Claims

1. Ear tag for establishing the identity of an animal, comprising at least one plate element (1), a pin (2), attached to the plate element (1), intended to be accommodated in a hole in the ear (8) of the animal, and a counter-element (9) into which the pin (2) can be fastened by pressing, said pin (2) having a cutting edge (6) for piercing the ear (8) of the animal on joining the pin (2) and the counter-element (9) to one another by pressing in order to lock the ear tag to the ear (8), as well as means (5) for storing the tissue material (10) removed from the ear (8) during piercing, **characterised in that** a cap (15) is joined to the counter-element 9 such that the cap (15) and the means (5) for storing the tissue material (10) are detachable or can be broken away from the ear tag.

2. Ear tag according to Claim 1, wherein the pin (2) has a separate cutting head (5) provided with a circular cutting edge (6) as well as a recess (7) for receiving the tissue material (10) removed, which cutting head (5) is located at the end of the pin (2) facing towards the counter-element (9).

3. Ear tag according to Claim 1, wherein the counter-element (9) has a recess (12) for accommodating the cutting head (5) with the tissue material (10) removed.

4. Ear tag according to Claim 3, wherein the recess (12) in the counter-element is delimited by the cap (15).

5. Ear tag according to any of the preceding claims, wherein the cutting head (5) can be firmly clamped with respect to the cap (15) during fastening of the pin (2) and the counter-element (9) to one another by pressing.

6. Ear tag according to Claim 6, wherein the cap (15) is detached or broken away from the counter-element (9) during fastening of the pin (2) and said counter-element (9) to one another by pressing.

7. Ear tag according to Claim 7, wherein the pin (2) and the counter-element (9) are fastened to one another by means of a snap-fit joint (11, 13, 14).

8. Ear tag according to one of the preceding claims, wherein the shape of the plate element (1) and of the counter-element (9) are identical.

9. Tool (20) for fastening the plate element (1) with pin (2) and the counter-element (9) to one another in order to form an ear tag according to Claim 6 or 7 on the ear (8) of an animal, comprising
- tongs (21), the jaws (22, 23) of which are shaped to engage on, respectively, the plate element (1) and the counter-element (9),
- receptor means (25) for accommodating the assembly (17) consisting of the cutting head (5), the head (15) and the tissue material (10), which assembly (17) is released on fastening the plate element (1) with pin (2) and the counter-element (9) to one another by pressing.

10. Tool (20) according to Claim 9, wherein the receptor means comprise a magazine (25) with several chambers (24, 26), as well as indexing means for successively moving the magazine (25) in such a way that the next chamber (24, 26) is held ready when fitting ear tags in succession.

## Patentansprüche

1. Ohrmarke zum Kennzeichnen der Identität eines Tieres, umfassend mindestens ein Plattenelement (1), einen Stift (2), der an dem Plattenelement (1) befestigt ist und in einem Loch in dem Ohr (8) des Tieres aufgenommen werden soll, und ein Gegenelement (9), in welchem der Stift (2) durch Pressen befestigt werden kann, wobei der Stift (2) eine Schneidkante (6) zum Durchstoßen des Ohres (8) des Tieres beim Zusammenfügen des Stiftes (2) und des Gegenelements (9) aneinander durch Pressen, um die Ohrmarke am Ohr (8) zu verriegeln, sowie Mittel (5) zum Aufnehmen des Gewebsmaterials (10), das während des Durchstoßens aus dem Ohr (8) entfernt wird, aufweist, **dadurch gekennzeichnet, dass** eine Kappe (15) mit dem Gegenelement (9) zusammengefügt ist, derart, dass die Kappe (15) und das Mittel (5) zum Aufnehmen des Gewebsmaterials (10) von der Ohrmarke abnehmbar sind oder von dieser abgebrochen werden können.

2. Ohrmarke nach Anspruch 1, wobei der Stift (2) einen gesonderten Schneidkopf (5) aufweist, der mit einer kreisförmigen Schneidkante (6) sowie mit einer Ausnehmung (7) zum Aufnehmen des entfernten Gewebsmaterials (10) versehen ist, wobei der Schneidkopf (5) an jenem Ende des Stiftes (2) angeordnet ist, welches, dem Gegenelement (9) zugewandt ist.

3. Ohrmarke nach Anspruch 1, wobei das Gegenelement (9) eine Ausnehmung (12) zum Aufnehmen des Schneidkopfes (5) mit dem entfernten Gewebsmaterial (10) aufweist.

4. Ohrmarke nach Anspruch 3, wobei die Ausnehmung (12) im Gegenelement durch die Kappe (15) begrenzt ist.

5. Ohrmarke nach einem beliebigen der vorangehenden Ansprüche, wobei der Schneidkopf (5) während des Befestigens des Stiftes (2) und des Gegenelements (9) aneinander durch Pressen in Bezug auf die Kappe (15) festgeklemmt werden kann.

6. Ohrmarke nach Anspruch 5, wobei die Kappe (15) während des Befestigens des Stiftes (2) und des Gegenelements (9) aneinander durch Pressen von dem Gegenelement (9) abgenommen oder abgebrochen wird.

7. Ohrmarke nach Anspruch 6, wobei der Stift (2) und das Gegenelement (9) mittels einer Schnappverbindung (11, 13, 14) aneinander befestigt werden.

8. Ohrmarke nach einem der vorangehenden Ansprüche, wobei die Gestalt des Plattenelements (1) und jene des Gegenelements (9) identisch sind.

9. Werkzeug (20) zum Befestigen des Plattenelements (1) mit dem Stift (2) und des Gegenelements (9) aneinander, um eine Ohrmarke nach Anspruch 6 oder 7 am Ohr (8) eines Tieres herzustellen, umfassend
- Zangen (21), deren Backen (22, 23) derart ausgestaltet sind, dass sie am Plattenelement (1) bzw. am Gegenelement (9) eingreifen,
- Aufnahmemittel (25) zum Aufnehmen der Baueinheit (17), welche aus dem Schneidkopf (5), dem Kopf (15) und dem Gewebsmaterial (10) besteht, wobei die Baueinheit (17) beim Befestigen des Plattenelements (1) mit dem Stift (2) und des Gegenelements (9) aneinander durch Pressen freigegeben wird.

10. Werkzeug (20) nach Anspruch 9, wobei das Aufnahmemittel ein Magazin (25) mit mehreren Kammern (24, 26) umfasst, sowie Fortschaltmittel zum aufeinanderfolgenden Bewegen des Magazins (25) derart, dass die nächste Kammer (24, 26) bereit gehalten wird, wenn Ohrmarken hintereinander angebracht werden.

## Revendications

1. Marque d'oreille servant à établir l'identité d'un animal, comportant au moins un élément en forme de plaque (1), une cheville (2) rattachée à l'élément en forme de plaque (1), destinée à être placée dans un trou de l'oreille (8) de l'animal, et un contre-élément (9) dans lequel la cheville (2) peut être fixée par pression, ladite cheville (2) ayant un bord coupant (6) servant à percer l'oreille (8) de l'animal en rejoignant la cheville (2) et le contre-élément (9) l'un à l'autre par pression afin de verrouiller la Marque d'oreille sur l'oreille (8), ainsi qu'un moyen (5) pour le stockage des tissus (10) enlevés de l'oreille (8) pendant le perçage, **caractérisée en ce qu'**un capuchon (15) est rattaché au contre-élément (9) de manière à ce que le capuchon (15) et le moyen (5) de stockage des tissus (10) soient détachables ou puissent être arrachés de la Marque d'oreille.

2. Marque d'oreille selon la revendication 1, dans laquelle la cheville (2) a une tête coupante séparée (5) équipée d'un bord coupant circulaire (6) ainsi que d'un renfoncement (7) destiné à recevoir les tissus (10) enlevés, laquelle tête coupante (5) est placée au bout de la cheville (2) tourné vers le contre-élément (9).

3. Marque d'oreille selon la revendication 1, dans laquelle le contre-élément (9) a un renfoncement (12) servant à loger la tête coupante (5) avec les tissus (10) enlevés.

4. Marque d'oreille selon la revendication 3, dans laquelle le renfoncement (12) du contre-élément (9) est délimité par le capuchon (15).

5. Marque d'oreille selon l'une quelconque des revendications précédentes, dans laquelle la tête coupante (5) peut être bloquée fermement par rapport au capuchon (15) pendant la fixation de la cheville (2) et du contre-élément (9) l'un à l'autre par pression.

6. Marque d'oreille selon la revendication 5, dans laquelle le capuchon (15) est détaché ou arraché du contre-élément (9) pendant la fixation de la cheville (2) et du dit contre-élément (9) l'un à l'autre par pression.

7. Marque d'oreille selon la revendication 6, dans laquelle la cheville (2) et le contre-élément (9) sont fixés l'un à l'autre au moyen d'une jointure à clip (11, 13, 14).

8. Marque d'oreille selon l'une quelconque des revendications précédentes, dans laquelle la forme de l'élément en forme de plaque (1) et celle du contre-élément (9) sont identiques.

9. Outil (20) servant à la fixation de l'élément en forme de plaque (1) avec la cheville (2) et du contre-élément (9) l'un à l'autre afin de former une marque d'oreille selon la revendication 6 ou 7 sur l'oreille (8) d'un animal, comprenant
- des pinces (21) dont les mâchoires (22, 23) sont conformées de manière à s'engager respectivement sur l'élément en forme de plaque (1) et le contre-élément (9),
- un moyen récepteur (25) destiné à loger l'ensemble (17) composé de la tête coupante (5), de la tête (15) et des tissus (10), lequel ensemble (17) est libéré en fixant l'élément en forme de plaque (1) avec la cheville (2) et le contre-élément (9) l'un à l'autre par pression.

10. Outil (20) selon la revendication 9, dans lequel le moyen récepteur comprend un magasin (25) à plusieurs cellules (24, 26) ainsi qu'un moyen d'indexation servant à déplacer successivement le magasin (25) de manière à ce que la cellule suivante (24, 26) soit maintenue prête lorsqu'on pose des marques d'oreilles les unes après les autres.
